# EUROPEAN PATENT SPECIFICATION

(11) **EP 3 348 716 B1**
(45) Date of publication and mention of the grant of the patent: **09.12.2020**
(21) Application number: 17425002.7
(22) Date of filing: 13.01.2017
(51) Int. Cl.: F16C 11/06, E03C 1/06, F16C 11/04, F16C 31/02, F16C 11/10

(54) **SUPPORT DEVICE FOR A SHOWER HEAD**
TRAGEVORRICHTUNG FÜR EINEN DUSCHKOPF
DISPOSITIF DE SUPPORT POUR UNE POMME DE DOUCHE

(43) Date of publication of application: 18.07.2018
(73) Proprietor: Nikles Tec Italia S.r.l., 25013 Carpenedolo Brescia (IT)
(72) Inventor: NIKLES, Gerhard, 25013 Carpenedolo Brescia (IT)
(74) Representative: Chimini, Francesco

(56) References cited:
- EP-A1- 1 160 384
- WO-A1-2011/016603
- JP-A- 2009 108 513

## Description

The present invention relates to a support device for a shower head of the type sliding along a shower rod to be positioned at a desired height, also known in the jargon as "a slide bar" device.

This device generally comprises a device body having a portion sliding along the shower rod and a portion for supporting a shower head. The sliding portion is provided with a blocking mechanism which normally engages the shower rod, blocking the shower head support device at a desired height and which, if operated by the user, disengages from the rod, allowing the free sliding in height of the shower head support device.

Embodiments of the shower head support device are already known of which also provide for a rotation of the shower head support portion relative to the sliding portion, around an axis of rotation perpendicular to the rod, i.e. around a horizontal axis of rotation. Generally, such axis of rotation is coaxial to the main axis along which the shower head support device body extends. In other words, in this embodiment with rotating shower support, for the shower to be oriented towards the user, the shower head support device body is oriented parallel to said user.

EP 1 160 384 A1 discloses a shower holding device and assembly ensuring fixation at a specific location on a wall slide bar; JP 2009 108513 A discloses a shower hook capable of positioning and holding a hook part for holding a shower head at a predetermined angle in the rotating direction; WO 2011/016603 A1 discloses a further example of a detachable shower holder.

In certain cases, for example when the shower head has a connecting portion to the support device of limited length, the shower head remains distanced from the user and it is therefore not possible to use it so as to deliver a vertical jet of water.

The need is therefore deeply felt to provide a slide bar which allows the shower head to be used as a fixed overhead shower, i.e. with the nozzle plate substantially horizontal, even when the shower head is supported by the shower head support device.

One purpose of the present invention is to provide a shower head support device able to meet such need.

Another object of the invention is to provide a shower head support device having a shower head support portion rotating relative to the sliding portion along the rod and which is at the same time economical to produce, easy and quick to assemble.

Such purpose is achieved by a shower head support device made according to claim 1. The dependent claims describe preferred or advantageous embodiments of the shower head support device.

The characteristics and advantages of the shower head support device according to the invention will, in any case, be evident from the description given below of its preferred embodiments, made by way of a non-limiting example with reference to the appended drawings, wherein:

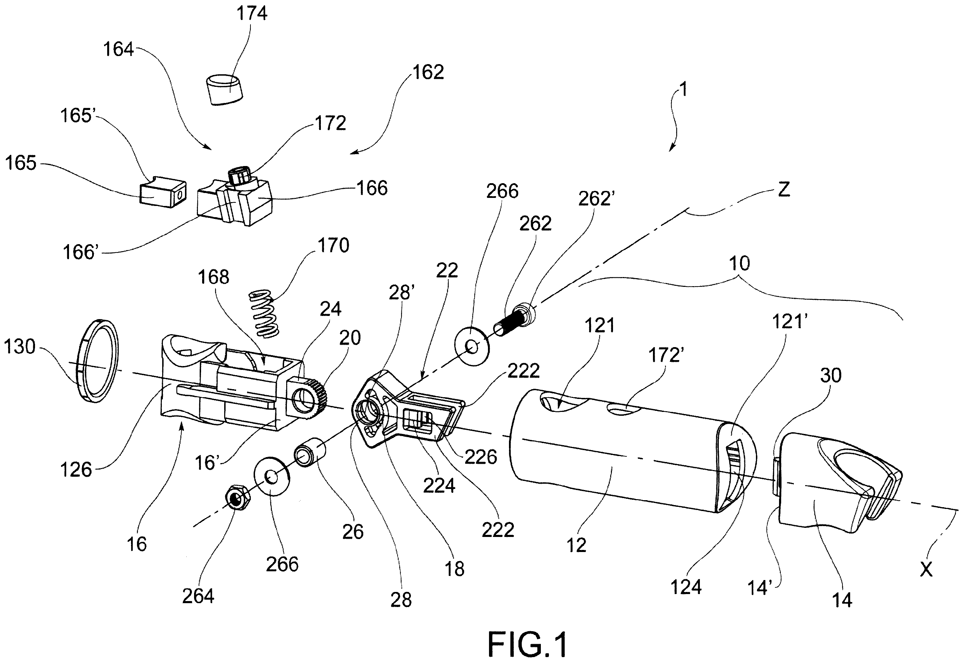

-figure 1 is an exploded perspective view of the shower head support device;

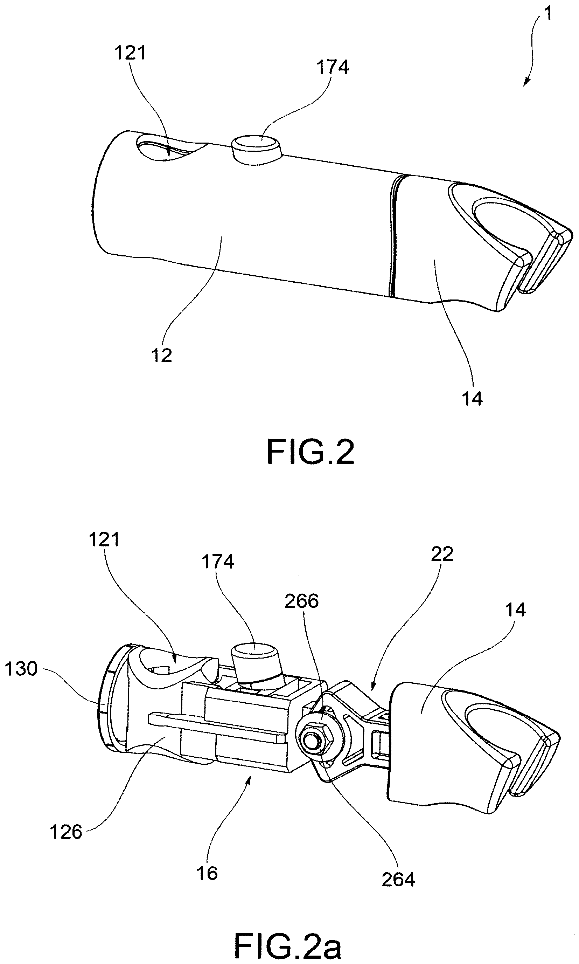

figure 2 is a perspective view of the shower head support device assembled;
- figure 2a is a perspective view of the assembled shower head support device, with the sliding portion without the outer casing so as to show the internal mechanism;

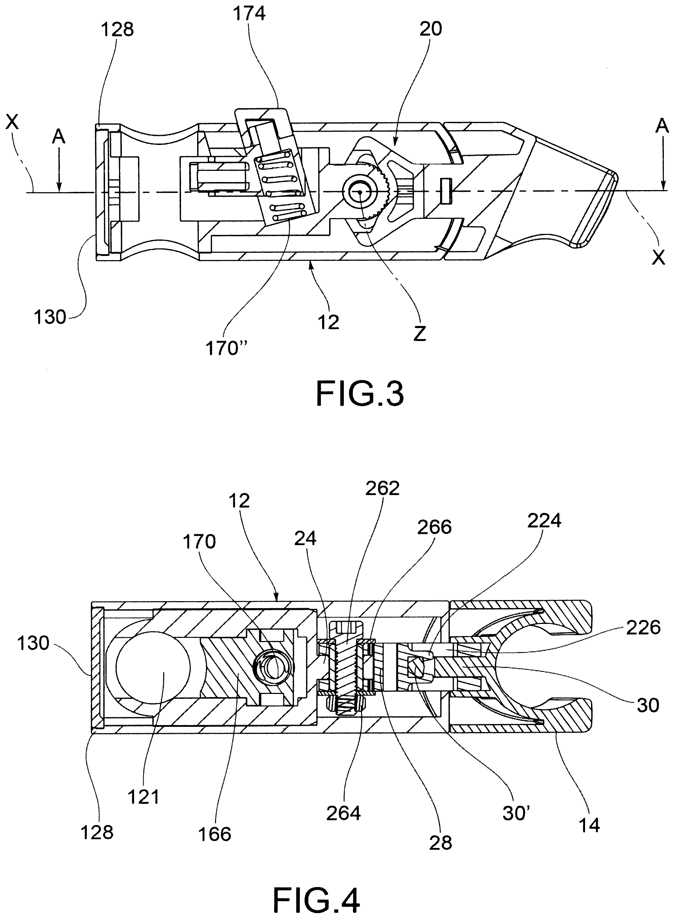

figure 3 is an axial cross-section of the assembled device;
figure 4 is an axial cross-section of the shower head support device along the line A-A in figure 3; and
- figures 5 and 5a show the shower head support device assembled to a shower rod and with the shower support portion in two different angular positions.

In said drawings, reference numeral 1 globally denotes the shower head support device according to the invention.

The shower head support device 1 comprises a device body 10 which extends mainly along a device axis X. The device body 10 comprises a sliding portion 12 along a rod 2 of the shower, henceforth also called proximal portion 12, and a support portion 14 of a shower head 3, henceforth also called the distal portion 14.

The proximal portion 12 is crossed by a through opening 121 for the rod.

The device axis X is perpendicular to the rod axis Y.

In the proximal portion 12, a blocking mechanism 16 is housed, suitable for blocking the shower head support device 1 in a desired position along the rod 2.

As will be described later in more detail, the blocking mechanism 16 supports a movable blocking member 162. Such movable blocking member 162 is movable, by actuation of a control member 164 by a user, between an advanced position, in which it engages the rod 2 of the shower and a retracted position, in which it disengages from the rod 2.

The distal portion 14 is connected to the blocking mechanism 16 by means of a rotation coupling 20 suitable to allow controlled rotation of the distal portion 14 relative to the proximal portion 12 around a rotation axis Z perpendicular to the rod axis Y.

Controlled rotation is taken to mean that, pushed by the user, the distal portion 14 rotates with respect to the proximal portion 12 between two end stroke positions, also being able to stop in at least one intermediate position, for example between a plurality of predetermined intermediate positions.

According to one embodiment, described hereinafter in more detail with reference to the attached figures, the rotation axis Z is also perpendicular to the axis of the device X.

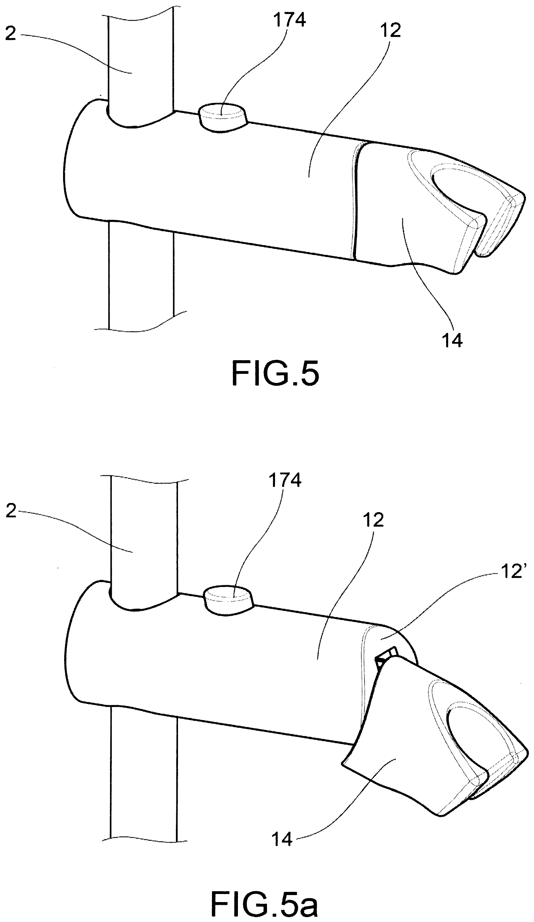

In other words, both the proximal portion 12 and the distal portion 14, rotatable with respect to the proximal portion 12, are both directed towards the user, so that the dispenser head of the jet of water is located at the maximum possible distance from the shower rod and can also be used to deliver a vertical water jet if the distal portion 14 is rotated downwards as in figure 5a.

The controlled rotation is given by the sliding of a toothed surface 18 of the distal portion 14 on a toothed counter-surface 20 of the blocking mechanism 16. The coupling between the teeth of the toothed surface 18 and the toothed counter-surface 20 is suitable to allow the arrest of the distal portion in one of a plurality of angular positions with respect to the proximal portion.

In other words, the distal portion 14 performs a stepped rotation with respect to the proximal portion 12.

More precisely, the toothed surface 18 and the toothed counter-surface 20 extend along an arc of circumference.

The toothed surface 18 is a concave surface made on a swivel attachment 22 of the distal portion 14. The toothed counter-surface 20 is a convex surface made on a distal appendage 24 of the blocking mechanism 16.

In one embodiment, the distal portion 14 rotates around a rotation pin 26 which crosses both the swivel attachment 22 and the distal appendage 24 of the blocking mechanism 16.

In one embodiment, the rotation pin 26 acts as the support element for the distal portion 14 and as the axial connection between the swivel attachment 22 and the distal appendage 24.

In one embodiment, the rotation pin 26 is connected to the swivel attachment 22 and to the distal appendage 24 by means of a connecting screw 262 that axially crosses the rotation pin 26, which is therefore provided with a through axial hole and which screws into a locking nut 264. In one embodiment, the head 262' of the connecting screw 262 and the locking nut 264 act on respective washers 266 which abut against the side walls of the swivel attachment 22.

According to one embodiment, the toothed surface 18 is made on the inner side of an annular portion 28 of the swivel attachment 22. The distal appendage 24 of the blocking mechanism 16 is inserted in this annular portion 28 through a circumferential gap 28' made in the annular portion 28.

Note that, by suitably selecting the tightening torque of the connecting screw 262, an optimal friction effect is obtained, and thus control of the rotation between the swivel attachment 22 and the distal appendage 24.

In one embodiment, the distal portion 14 and the proximal portion 12 of the device body 10 have respective sliding surfaces 12', 14' complementary to each other. For example the sliding surface 12' of the proximal portion 12 has a convex shape and the sliding surface 14' of the distal portion 14 has a concave shape.

The swivel attachment 22 extends from the sliding surface 14' of the distal portion 14 and is inserted in the proximal portion 12 through a circumferential slot 124, i.e. extending along an arc of circumference oriented vertically, made in the sliding surface 12' of the proximal portion 12.

In one embodiment, the distal portion 14 is connected in a releasable manner to its swivel attachment 22.

For example, the swivel attachment 22 comprises a pair of parallel walls 222 which extend in the distal direction from the toothed surface 18, i.e. facing towards the distal portion 14. In each wall 222 an elastic locking tooth 224 is made. For example, in each wall 222 a window 226 is made partially engaged by the elastic locking tooth 224.

From the distal portion 24, for example from the sliding surface 14', a coupling pin 30 extends which is inserted between the parallel walls 222 and which is snap-engaged by the elastic locking teeth 224.

For example, the coupling pin 30 has a pointed end 30' which, being inserted between the parallel side walls 222 causes an outward deflection of the locking teeth 224. The pin 30 also forms, for each locking tooth 224, an undercut or a groove 30" in which the locking tooth 224 snap-engages, coupling the swivel attachment 22 to the distal portion 14.

Returning now to the movable blocking member 162, in one embodiment it comprises a catch 165 suitable to radially engage the rod 2. For example, the catch 165 is made of a thermoplastic material, such as NBR, with a high friction coefficient.

The catch 165 is supported by a slide 166 so as to have one rod engagement end 165' facing towards the through-opening for the rod 2. The slide 166 is translatable in a slide seat 168 made in the blocking mechanism 16. The slide 166 is translatable in said slide seat 168 in a direction inclined with respect to the rod axis Y between a raised position, in which the catch 165 engages the lateral surface of the rod, and a lowered position, in which the catch 165 is disengaged from the rod 2.

For example, at least one guide groove 166' engageable by a complementary guide projection - not shown - which extends from a respective wall of the blocking mechanism 16 is made in the slide 166.

In one embodiment, the slide 166 is pressed by a spring 170 to return to the raised rest position.

For example, the spring 170 is a cylindrical spring housed in a spring seat 170' made in the slide and resting on an inclined plane 170" of the blocking mechanism 122.

In one embodiment, the slide seat 168 is closed distally by a flat end wall 16' from which the distal appendage 24 of the blocking mechanism 122 extends.

In one embodiment, the blocking mechanism 16 forms, on the side opposite the distal appendage 24, a tubular portion coaxial to the through opening 126 for the rod 121 and suitable to favour, for example thanks to the material which the blocking mechanism is made of, the sliding along the rod 2. For example, the blocking mechanism 16, and therefore the tubular portion 126, is made of a polymeric material with a high resistance, such as polyoxymethylene (POM).

In one embodiment, a push-button portion 172 of the slide 166, for example protected by a cap 174, protrudes from an upper side of the proximal portion 12 through a push-button hole 172', so as to allow the user to press the slide 166 downwards.

In one embodiment, the proximal portion 12 has open proximal end 128 suitable to allow the insertion of the blocking mechanism 122 inside the device body 10. The open proximal end 128 is closed by a plug 130.

As a result, the assembly of the shower head support device 1 is quick and easy.

The blocking mechanism 16, with the swivel attachment 22 connected to the distal appendage 24, is inserted in a respective seat inside the proximal portion 12 of the device body 10. In this phase, the slide 166 can be pressed downwards so as to allow the input of the push-button portion 172, until the latter finds the push-button hole 174.

At this point the plug 130 can be applied to the proximal portion 12, for example by screwing or permanently.

Finally, the proximal portion 14 is connected to the swivel attachment 22 by inserting the coupling pin into the circumferential slot until it engages the locking teeth.

A person skilled in the art may make modifications and adaptations to the embodiments of the shower head support device according to the invention, replacing elements with others functionally equivalent so as to satisfy contingent requirements while remaining within the sphere of protection of the following claims.

## Claims

1. Support device (1) for a shower head, comprising:
- a device body (10) extending mainly along a device axis (X) comprising a proximal portion (12) suitable for sliding along a rod (2) of the shower, said rod (2) extending along a rod axis (Y) which is perpendicular to the device axis (X), in installed condition, , and a distal portion (14) for supporting a shower head, wherein said proximal portion (12) is crossed by a through opening (121) for the rod;
- a device blocking mechanism (16) fixed inside said proximal portion (12) and supporting a movable blocking member (162) comprising a control member (164), said movable blocking member (162) being movable, by actuation of the control member (164) by a user, between an advanced position, in which it is suitable for engaging the shower rod, and a retracted position, in which it is suitable for disengaging from said rod,
wherein the distal portion (14) is connected to the device blocking mechanism (16) by means of a rotation coupling (20) suitable to allow controlled rotation of the distal portion (14) relative to the proximal portion (12) around a rotation axis (Z) perpendicular to the rod axis (Y),
wherein said controlled rotation is given by the sliding of a toothed surface (18) of the distal portion (14) on a toothed counter-surface (20) of the blocking mechanism (16), the coupling between the teeth of the toothed surface and the teeth of the toothed counter-surface being suitable to allow the arrest of the distal portion (14) in one of a plurality of angular positions with respect to the proximal portion (12),
and wherein said toothed surface (18) and toothed counter-surface (20) extend along an arc of circumference, wherein the toothed surface (18) is a concave surface made in a swivel attachment (22) of the distal portion (14), and in which the toothed counter-surface (20) is a convex surface made on a distal appendage (24) of the blocking mechanism (16).

2. Device according to claim 1, wherein the axis of rotation (Z) is perpendicular to the body axis (X).

3. Device according to claim 1 or 2, wherein the distal portion (14) rotates around a rotation pin (26) which crosses both the swivel attachment (22) and the distal appendage (24) of the blocking mechanism (16).

4. Device according to any of the preceding claims, in which the toothed surface (18) is made on the inside of an annular portion (28) of the swivel attachment (22), the distal appendage (24) of the blocking mechanism (16) being inserted in said annular portion through a circumferential gap (28') made in said annular portion (28).

5. Device according to any of the preceding claims, wherein the distal portion (14) and the proximal portion (12) have respective sliding surfaces (14', 12') complementary to each other, wherein the swivel attachment (22) extends from the sliding surface (14') of the distal portion (14) and is inserted in the proximal portion (12) through a circumferential slot (124) made in the sliding surface (12') of the proximal portion (12).

6. Device according to any of the preceding claims, wherein the distal portion (14) is connected in a releasable manner to its swivel attachment (22).

7. Device according to the preceding claim, wherein the swivel attachment (22) comprises a pair of parallel walls (222) which extend in the distal direction from the toothed surface (18), in each wall an elastic locking tooth (224) being made, and in which a coupling pin (30) extends from the distal portion (14) which is inserted between said parallel walls and which is snap-engaged by locking teeth (224) .

8. Device according to any of the preceding claims, wherein said movable blocking member (162) comprises a catch (165) suitable to radially engage the rod (2) and a slide (166) which supports said catch and which is movable in a hollow seat (168) of the blocking mechanism (16) in a direction inclined with respect to the axis of the rod between a raised position, in which the catch (165) is suitable for engaging the rod, and a lowered position, in which the catch (165) is suitable for being disengaged from the rod.

9. Device according to the preceding claim, in which the slide (166) is pressed by a spring (170) to return to the raised position.

10. Device according to any of the preceding claims, wherein the proximal portion (12) has an open proximal end (128) suitable to allow the insertion of the blocking mechanism (16) inside the device body, said open proximal end being closed by a plug (130).

## Patentansprüche

1. Eine Haltevorrichtung (1) für einen Duschkopf, die Folgendes umfasst:
- einen Vorrichtungskörper (10), der sich hauptsächlich entlang einer Vorrichtungsachse (X) erstreckt und der Folgendes umfasst: einen proximalen Abschnitt (12), der zum Gleiten entlang einer Stange (2) der Dusche geeignet ist, wobei die genannte Stange (2) sich entlang einer Stangenachse (Y) erstreckt, die im eingebauten Zustand senkrecht zur Vorrichtungsachse (X) ist, und einen distalen Abschnitt (14) zum Tragen eines Duschkopfes, wobei der genannte proximale Abschnitt (12) von einer Durchgangsöffnung (121) für die Stange durchquert wird;
- einen Vorrichtungs-Blockiermechanismus (16), der im Inneren des genannten proximalen Abschnitts (12) befestigt ist und ein bewegliches Blockierelement (162) trägt, das ein Steuerelement (164) umfasst, wobei das genannte bewegliche Blockierelement (162) durch Betätigung des Steuerelements (164) durch einen Benutzer beweglich ist zwischen einer vorgeschobenen Position, in der es geeignet ist, mit der Duschstange in Eingriff zu kommen, und einer zurückgezogenen Position, in der es geeignet ist, den Eingriff mit der Stange zu lösen,
wobei der distale Abschnitt (14) mit dem Vorrichtungs-Blockiermechanismus (16) mittels einer Drehkupplung (20) verbunden ist, die geeignet ist, eine kontrollierte Drehung des distalen Abschnitts (14) relativ zum proximalen Abschnitt (12) um eine zur Stangenachse (Y) senkrechte Drehachse (Z) zu ermöglichen,
wobei die genannte kontrollierte Drehung durch das Gleiten einer gezahnten Oberfläche (18) des distalen Abschnitts (14) auf einer gezahnten Gegenfläche (20) des Blockiermechanismus (16) gegeben ist, wobei die Kopplung zwischen den Zähnen der gezahnten Oberfläche und den Zähnen der gezahnten Gegenfläche dazu geeignet ist, die Arretierung des distalen Abschnitts (14) in einer von mehreren Winkelpositionen in Bezug auf den proximalen Abschnitt (12) zu ermöglichen,
und wobei sich die genannte gezahnte Oberfläche (18) und die gezahnte Gegenfläche (20) entlang eines Umfangsbogens erstrecken,
wobei die gezahnte Oberfläche (18) eine konkave Oberfläche ist, die in einer Schwenkbefestigung (22) des distalen Abschnitts (14) ausgebildet ist, und wobei die gezahnte Gegenfläche (20) eine konvexe Oberfläche ist, die an einem distalen Fortsatz (24) des Blockiermechanismus (16) ausgebildet ist.

2. Die Vorrichtung nach Anspruch 1, wobei die Rotationsachse (Z) senkrecht zur Körperachse (X) verläuft.

3. Die Vorrichtung nach Anspruch 1 oder 2, wobei sich der distale Teil (14) um einen Drehstift (26) dreht, der sowohl die Schwenkbefestigung (22) als auch den distalen Fortsatz (24) des Blockiermechanismus (16) kreuzt.

4. Die Vorrichtung nach irgendeinem der vorstehenden Ansprüche, bei der die gezahnte Oberfläche (18) an der Innenseite eines ringförmigen Abschnitts (28) der Schwenkbefestigung (22) ausgebildet ist, wobei der distale Fortsatz (24) des Blockiermechanismus (16) in den genannten ringförmigen Abschnitt durch einen im genannten ringförmigen Abschnitt (28) ausgebildeten Umfangsspalt (28') hindurch eingeführt wird.

5. Die Vorrichtung nach irgendeinem der vorstehenden Ansprüche, wobei der distale Abschnitt (14) und der proximale Abschnitt (12) jeweils zueinander komplementäre Gleitflächen (14', 12') aufweisen, wobei die Schwenkbefestigung (22) von der Gleitfläche (14') des distalen Abschnitts (14) ausgeht und in den proximalen Abschnitt (12) durch einen Umfangsschlitz (124), der in der Gleitfläche (12') des proximalen Abschnitts (12) ausgebildet ist, eingeführt wird.

6. Die Vorrichtung nach irgendeinem der vorstehenden Ansprüche, wobei der distale Teil (14) auf lösbare Weise mit seiner Schwenkbefestigung (22) verbunden ist.

7. Die Vorrichtung nach irgendeinem der vorstehenden Ansprüche, wobei die Schwenkbefestigung (22) ein Paar paralleler Wände (222) umfasst, die sich in distaler Richtung von der gezahnten Oberfläche (18) aus erstrecken, wobei in jeder Wand ein elastischer Verriegelungszahn (224) ausgebildet ist, und wobei sich ein Kupplungsstift (30) vom distalen Abschnitt (14) aus erstreckt, der zwischen den genannten parallelen Wänden eingefügt ist und der von den Verriegelungszähnen (224) schnappend eingerastet wird.

8. Die Vorrichtung nach irgendeinem der vorstehenden Ansprüche, wobei das genannte bewegliche Blockierelement (162) eine Klinke (165), die geeignet ist, radial mit der Stange (2) in Eingriff zu kommen, und einen Schieber (166) umfasst, der die genannte Klinke trägt und der in einen hohlen Sitz (168) des Blockiermechanismus (16) bewegbar ist, und zwar in einer Richtung, die relativ zur Achse der Stange geneigt ist zwischen einer angehobenen Position, in der die Klinke (165) geeignet ist, mit der Stange in Eingriff zu kommen, und einer abgesenkten Position, in der die Klinke (165) geeignet ist, von der Stange gelöst zu werden.

9. Die Vorrichtung nach dem vorstehenden Anspruch, bei der der Schieber (166) durch eine Feder (170) gedrückt wird, um in die angehobene Position zurückzukehren.

10. Die Vorrichtung nach irgendeinem der vorstehenden Ansprüche, wobei der proximale Teil (12) ein offenes proximales Ende (128) aufweist, das dazu geeignet ist, die Einführung des Blockiermechanismus (16) in das Innere des Vorrichtungskörpers zu ermöglichen, wobei dieses offene proximale Ende durch einen Stopfen (130) verschlossen ist.

## Revendications

1. Dispositif de support (1) pour une pomme de douche, comprenant :
- un corps de dispositif (10) s'étendant principalement le long d'un axe de dispositif (X) comprenant une portion proximale (12) adaptée pour coulisser le long d'une barre (2) de la douche, ladite barre (2) s'étendant le long d'un axe de barre (Y) qui est perpendiculaire à l'axe de dispositif (X), dans un état monté, et une portion distale (14) pour supporter une pomme de douche, dans lequel ladite portion proximale (12) est traversée par une ouverture traversante (121) pour la barre ;
- un mécanisme de blocage de dispositif (16) fixé à l'intérieur de ladite portion proximale (12) et supportant un organe de blocage mobile (162) comprenant un organe de commande (164), ledit organe de blocage mobile (162) étant mobile, par actionnement de l'organe de commande (164) par un utilisateur, entre une position avancée, dans laquelle il est adapté pour venir en prise avec la barre de douche, et une position rétractée, dans laquelle il est adapté pour se désolidariser de ladite barre,
dans lequel la portion distale (14) est connectée au mécanisme de blocage de dispositif (16) au moyen d'un couplage de rotation (20) adapté pour permettre une rotation commandée de la portion distale (14) par rapport à la portion proximale (12) autour d'un axe de rotation (Z) perpendiculaire à l'axe de barre (Y),
dans lequel ladite rotation commandée est obtenue par le coulissement d'une surface dentée (18) de la portion distale (14) sur une surface opposée dentée (20) du mécanisme de blocage (16), le couplage entre les dents de la surface dentée et les dents de la surface opposée dentée étant adapté pour permettre l'immobilisation de la portion distale (14) dans l'une d'une pluralité de positions angulaires par rapport à la portion proximale (12),
et dans lequel ladite surface dentée (18) et ladite surface opposée dentée (20) s'étendent le long d'un arc de cercle,
dans lequel la surface dentée (18) est une surface concave créée dans une fixation pivotante (22) de la portion distale (14), et dans laquelle la surface opposée dentée (20) est une surface convexe créée dans un prolongement distal (24) du mécanisme de blocage (16).

2. Dispositif selon la revendication 1, dans lequel l'axe de rotation (Z) est perpendiculaire à l'axe de corps (X).

3. Dispositif selon la revendication 1 ou 2, dans lequel la portion distale (14) tourne autour d'une tige de rotation (26) qui traverse à la fois la fixation pivotante (22) et le prolongement distal (24) du mécanisme de blocage (16).

4. Dispositif selon l'une quelconque des revendications précédentes, dans lequel la surface dentée (18) est créée sur l'intérieur d'une portion annulaire (28) de la fixation pivotante (22), le prolongement distal (24) du mécanisme de blocage (16) étant inséré dans ladite portion annulaire à travers un espace circonférentiel (28') crée dans ladite portion annulaire (28).

5. Dispositif selon l'une quelconque des revendications précédentes, dans lequel la portion distale (14) et la portion proximale (12) ont des surfaces coulissantes respectives (14', 12') complémentaires l'une avec l'autre, dans lequel la fixation pivotante (22) s'étend depuis la surface coulissante (14') de la portion distale (14) et est insérée dans la portion proximale (12) à travers une fente circonférentielle (124) créée dans la surface coulissante (12') de la portion proximale (12).

6. Dispositif selon l'une quelconque des revendications précédentes, dans lequel la portion distale (14) est connectée de manière libérable à sa fixation pivotante (22).

7. Dispositif selon la revendication précédente, dans lequel la fixation pivotante (22) comprend une paire de parois parallèles (222) qui s'étendent dans la direction distale depuis la surface dentée (18), dans chaque paroi une dent de verrouillage élastique (224) étant créée, et dans laquelle une tige de couplage (30) s'étend depuis la portion distale (14) qui est insérée entre lesdites parois parallèles et qui est mise en prise par encliquetage par des dents de verrouillage (224).

8. Dispositif selon l'une quelconque des revendications précédentes, dans lequel ledit organe de blocage mobile (162) comprend un taquet (165) adapté pour venir radialement en prise avec la barre (2) et un coulisseau (166) qui supporte ledit taquet et qui est mobile dans un siège creux (168) du mécanisme de blocage (16) dans une direction inclinée par rapport à l'axe de la barre entre une position relevée, dans laquelle le taquet (165) est adapté pour venir en prise avec la barre, et une position abaissée, dans laquelle le taquet (165) est adapté pour être désolidarisé de la barre.

9. Dispositif selon la revendication précédente, dans lequel le coulisseau (166) est poussé par un ressort (170) à revenir à la position relevée.

10. Dispositif selon l'une quelconque des revendications précédentes, dans lequel la portion proximale (12) a une extrémité proximale ouverte (128) adaptée pour permettre l'insertion du mécanisme de blocage (16) à l'intérieur du corps de dispositif, ladite extrémité proximale ouverte étant fermée par un bouchon (130).
